# EUROPÄISCHE PATENTSCHRIFT

(11) **EP 1 146 330 B1**
(45) Veröffentlichungstag und Bekanntmachung des Hinweises auf die Patenterteilung: **11.02.2004**
(21) Anmeldenummer: 01890075.3
(22) Anmeldetag: 15.03.2001
(51) Int. Cl.: G01N 21/33

(54) **Verfahren zur automatisierten Uberwachung des Klebstoffauftrags auf Holz und Holzwerkstoffen**
Method for automatic monitoring the application of adhesive on wood and wooden materials
Méthode pour le contrôle automatique de l'application d'adhesif sur bois ou sur des matériaux en bois

(30) Priorität: 27.03.2000 AT 5142000
(43) Veröffentlichungstag der Anmeldung: 17.10.2001
(73) Patentinhaber: Theurl Leimholzbau GmbH, 9911 Assling (AT)
(72) Erfinder: Waschnig, Christian, Dipl. Ing., 9900 Lienz (AT)

(56) Entgegenhaltungen:
- FR-A- 2 565 347
- US-A- 4 778 999
- US-A- 4 831 264
- US-A- 4 896 040

## Beschreibung

Die Erfindung betrifft ein Verfahren zur automatisierten Überwachung des Klebstoffauftrags auf Holz und Holzwerkstoffen.

In holzverarbeitenden Betrieben mit einem hohem Automatisierungsgrad besteht häufig die Anforderung, eine gleichbleibend hohe Qualität eines Klebstoffauftrags auf Werkstücken aus Holz oder Holzwerkstoffen sicherzustellen. Zur automatisierten Kontrolle des Klebstoffauftrags am Werkstück werden nach dem derzeitigen Stand der Technik optoelektronische Systeme mit Kameras eingesetzt, durch welche die Klebstoffauftragsfläche optisch begutachtet wird. Die Auswertung der aufgenommenen Kamerasignale erfolgt durch ein nachgelagertes Bildverarbeitungssystem. Bekannt sind hierfür Verfahren, bei denen die Beurteilung ähnlich dem menschlichen Auge über eine Bewertung von Helligkeits- oder Farbunterschieden im Bereich des für den Menschen sichtbaren Lichtes erfolgt. Diese Verfahren funktionieren zufriedenstellend, solange die Helligkeits- oder Farbkontraste zwischen Werkstück und aufgetragenem Klebstoff hoch genug sind. Gerade der Werkstoff Holz ist jedoch als natürlich gewachsenes Material - geprägt durch Art, Wachstum, Umwelteinflüsse und Bearbeitung - in seinen Merkmalen so unterschiedlich, dass kein Stück dem anderen gleicht. Daher variiert unter Produktionsbedingungen das Aussehen von Holz, aber auch von Holzwerkstoffen, ständig in einem so breiten Bereich, dass ausreichende Helligkeits- oder Farbunterschiede zur Klebstoffschicht nicht in allen Fällen zweifelsfrei festgestellt werden können. Eine ähnliche Problematik ergibt sich beim Auftragen von sehr dünnen Klebstoffschichten, da auch diese nur mehr sehr geringe Helligkeits- oder Farbkontraste zum Werkstück aufweisen. In jedem Fall entscheidend für eine zuverlässige Erkennung des Klebstoffauftrags, speziell im beschriebenen Grenzbereich mit sehr schwachen Kontrasten, sind genau definierte und absolut gleichbleibende Beleuchtungsverhältnisse im System. Fremdlichteinflüsse auf das Werkstück im Bereich des Bildfeldes der Kamera müssen daher durch aufwendige Abschirmungsmaßnahmen verhindert werden. Bekannte Varianten dieser Verfahren verwenden zur Kontrastverbesserung Farbstoffe, die dem Klebstoff beigemengt werden. Da sich der Farbton dieser Zusätze für die gewünschte Wirkung entsprechend stark vom Farbtonbereich des Werkstücks unterscheiden muss, ergeben sich dabei besonders auffällige, stark sichtbare Klebefugen, was für viele Anwendungsfälle nicht erwünscht ist.

Andere Verfahren weisen Klebstotte mittels UV-Fluoreszenz nach (siehe z.B. US 4 778 999 oder FR 2 565 347).

Weitere bekannte Varianten dieser Verfahren verändern den Klebstoff durch Zusatz von UVaktiven Substanzen. Diese Stoffe haben die Eigenschaft, dass sie bei Bestrahlung mit UV-Licht zur Fluoreszenz angeregt werden. Das auf diese Weise abgegebene, für das menschliche Auge sichtbare Licht führt zu eindeutig auswertbaren Helligkeitskontrasten zwischen Werkstück und modifiziertem Klebstoff, wenn keine andere Lichtquelle die Messanordnung durch zusätzliches sichtbares Licht beeinträchtigt. Somit sind auch bei diesem Verfahren aufwendige Abschirmungsmaßnahmen gegen Fremdlicht erforderlich. Weiters führt die ständig nötige Beigabe von fluoreszierenden Stoffen zu erhöhten laufenden Herstellungskosten sowie produktionstechnischen Mehraufwand für die Klebstoffinodifikation, da eine homogene Durchmischung mit den Zusatzstoffen notwendig ist.

Aus US 4 831 264 ist ein UV-Absorptionsverfahren zum Nachweis von Klebstoffen auf beschichtetem Papier bekannt.

Aufgabe der Erfindung ist es daher, ein kamerabasiertes Verfahren zur automatisierten Überwachung des Klebstoffauftrags auf Holz und Holzwerkstoffen zu schaffen, das durch besonders kontrastreiche Bilder auch bei gleichem Farbton von Klebstoffauftrag und Werkstück oder sehr dünnen, nahezu transparenten Klebstoffschichten eine eindeutige Unterscheidung beider Teile ermöglicht, ohne dabei jegliche Modifikation des Klebstoffes zu erfordern.

Dies wird erfindungsgemäß durch die kennzeichnenden Merkmale des Patentanspruches 1 erreicht. Eine weitere vorteilhafte Ausgestaltung der Erfindung ist dem Unteranspruch zu entnehmen. Holz hat die Eigenschaft, UV-Strahlung stark zu absorbieren. Hierfür ist hauptsächlich der Holzbestandteil Lignin verantwortlich. Im Gegensatz dazu ist ein Merkmal von vielen Klebstoffen unterschiedlicher Basis, wie zum Beispiel Weißleim auf Polyvinylacetatbasis, dass der UV-Bereich nur gering absorbiert wird. Grundgedanke der Erfindung ist, diese unterschiedlichen Absorptionseigenschaften im UV-Bereich für eine eindeutige Unterscheidung zwischen Werkstück und Klebstoffauftrag zu nutzen. Hierzu wird das Werkstück mit Klebstoffauftrag durch eine Beleuchtungseinrichtung mit Licht im UV-Bereich bestrahlt. Das von Werkstück und Klebstoffauftrag unterschiedlich stark abgestrahlte UV-Licht wird durch ein Kamerasystem mit einer ausreichend hohen spektralen Empfindlichkeit im UV-Bereich aufgenommen. Das Bild, das auf diese Weise von der Kamera erzeugt wird, ist dadurch gekennzeichnet, dass Bereiche mit Klebstoffauftrag sehr hell erscheinen, Bereiche ohne Klebstoffauftrag unabhängig vom Farbton des Werkstückes sehr dunkel. Mit diesen kontrastreichen Bildern ist daher eine zuverlässige Auswertung durch das angeschlossene Bildverarbeitungssystem gewährleistet.

Bei Weiterentwicklung des Verfahrens nach Patentanspruch 2 wird durch ein im Strahlenverlauf des UV-Lichtes angebrachtes Filtersystem nur Licht eines geeigneten UV-Wellenlängenbereiches durchgelassen, bei dem die Absorptionsunterschiede zwischen Werkstück und Klebstoffauftrag möglichst groß sind. Dadurch wird im aufgenommenen Kamerabild eine weitere Kontrastverbesserung erreicht. Das Filtersystem befindet sich dabei vorzugsweise am oder im Kamerasystem, denn auf diese Weise lassen sich gleichzeitig auch unerwünschte Fremdlichteinflüsse, wie etwa durch direkte Sonneneinstrahlung, diffuses Tageslicht oder andere Lichtquellen in der Umgebung des Überwachungsbereiches, wirkungsvoll unterdrücken. Dies ist notwendig, da sich die spektrale Empfindlichkeit von Kameras üblicherweise weit über den UV-Bereich hinaus erstreckt. Mit geeigneter Filterung ist daher eine gezielte Anpassung an problematische Fremdlichtquellen durch Unterdrückung der störenden Wellenlängenbereiche erreichbar.

Durch das erfindungsgemäße Verfahren ergibt sich der wesentliche Vorteil, dass durch Erzielen besonders stark ausgeprägter Kontraste eine zuverlässige Erkennung des Klebstoffauftrags völlig unabhängig von den Farbtönen von Holz oder Holzwerkstoffen gegeben ist. Dies gilt insbesondere bei der sonst schwierigen Aufgabe, dünne, fast durchsichtige Klebstoffschichten auf sehr hellem Holz zu identifizieren. Daher ist es hier nicht mehr notwendig, Klebstoff unnötig dick aufzutragen, um eine zweifelsfreie Überwachung zu gewährleisten. Der Klebstoffauftrag kann vielmehr auf die für die erforderliche Festigkeit der Verklebung optimierte Menge reduziert werden, wodurch der laufende Kostenaufwand verringert wird. Eine weitere Kostensenkung ergibt sich gegenüber Verfahren, bei denen Farb- oder fluoreszierende Stoffe zum Klebstoff zugesetzt werden, da diese Zusätze beim erfindungsgemäßen Verfahren überflüssig sind. Gleichzeitig führt der Verzicht auf Klebstoffzusätze zu einem Wegfall unerwünschter Nebeneffekte, wie etwa besonders auffälligen Klebefugen. Ein weiterer wesentlicher Vorteil des erfindungsgemäßen Verfahrens besteht darin, dass aufwendige Abschirmungen des Messbereiches gegen unkontrolliertes Fremdlicht entfallen können, die bei den bekannten Verfahren nötig sind. Der reduzierte Aufwand und Platzbedarf erleichtert so besonders die Integration der Überwachungseinheit in eine bereits vorhandene Produktionslinie. Durch die freie Sicht auf den Messbereich wird zudem die Kontrolle und Wartung der Produktionseinrichtungen unterstützt.

Weitere Merkmale und Vorteile der Erfindung werden anhand der nachfolgend beschriebenen Zeichnung näher erläutert.

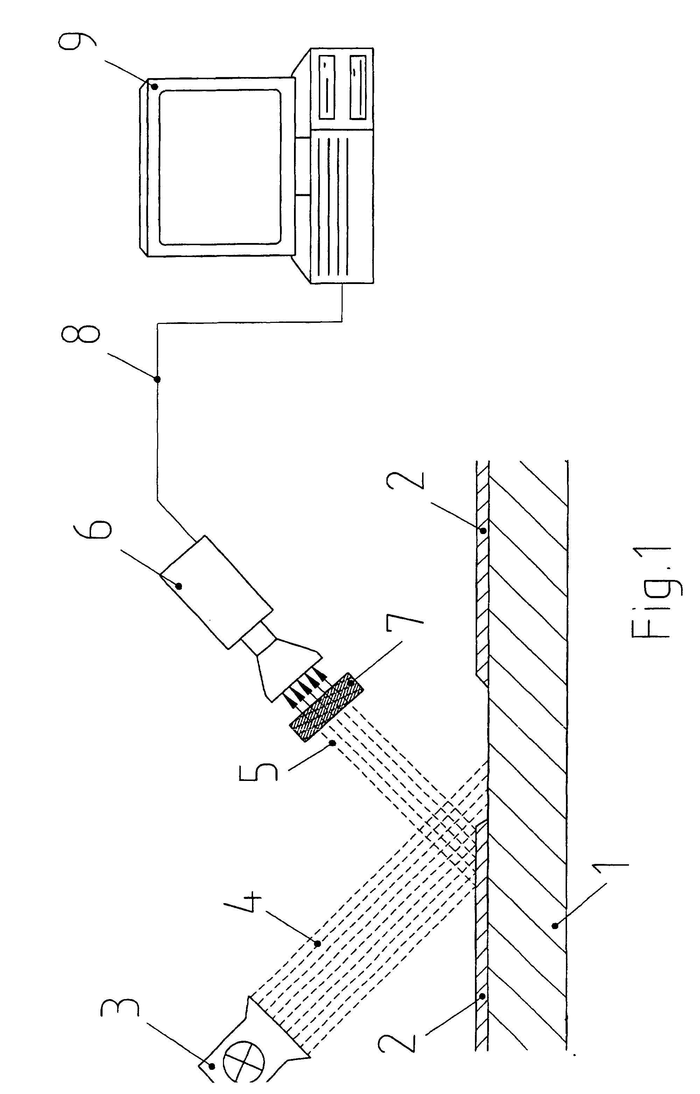

Figur 1 zeigt schematisch eine Überwachungseinrichtung des Klebstoffauftrags auf ein Werkstück, wobei Beleuchtungs- und Kameraanordnung sowie Strahlenverlauf des UV-Lichtes vereinfacht dargestellt sind.

Das Werkstück aus Holz oder Holzwerkstoffen (1) wird nach dem Auftrag von Klebstoff (2) durch eine Beleuchtungseinrichtung (3) mit Licht im UV-Bereich (4) bestrahlt. Durch geeignete Anordnung oder Abschirmung wird verhindert, dass dieses Licht direkt in das Kamerasystem (6) gelangt. Aufgrund der verschiedenen Absorptionseigenschaften im UV-Bereich wird das auftreffende UV-Licht (4) vom Werkstück (1) und Klebstoffauftrag (2) mit stark unterschiedlicher Intensität abgestrahlt, und zwar unabhängig von Farbtonschwankungen des Werkstückes (1), und auch bei sehr dünnen Klebstoffschichten (2). Dieses ausgesendete UV-Licht (5) wird nun durch ein Kamerasystem mit einer ausreichend hohen spektralen Empfindlichkeit im UV-Bereich (6) aufgenommen und in elektrische Signale (8) umgewandelt. Die Verwendung einer oder mehrerer Zeilen- oder Matrixkameras gestattet dabei die Anwendung in unterschiedlichen Produktionsumgebungen am bewegten oder ruhenden Werkstück bei Durchlauf- oder Taktbetrieb. Ein im Strahlenverlauf des UV-Lichtes, vorzugsweise am oder im Kamerasystem (6) befindliches, optisches Filtersystem (7) blockiert Wellenlängen außerhalb eines definierten UV-Bereiches. Dadurch wird vermieden, dass aufgrund der gewöhnlich weit über den UV-Bereich hinausreichenden spektralen Empfindlichkeit des Kamerasystems (6) unkontrollierte Fremdlichteinflüsse aus der Umgebung das aufgenommene UV-Licht (5) überlagern, und damit die aufgenommenen Kontraste verringern oder völlig beseitigen. Fremdlichteinflüsse können im übrigen auch von der Beleuchtungseinrichtung (3) selbst ausgehen, da viele UV-Lichtquellen auch Wellenlängen außerhalb des gewünschten UV-Bereiches abstrahlen. Vom Kamerasystem (6) wird auf diese Weise ein Bild erzeugt, dass durch markant ausgeprägte Helligkeitsunterschiede charakterisiert ist - Bereiche des Werkstücks mit Klebstoffauftrag (2) erscheinen praktisch weiß, Bereiche ohne Klebstoffauftrag (1) praktisch schwarz. Die Auswertung dieser Kamerasignale (8) erfolgt durch ein Bildverarbeitungssystem (9).

## Patentansprüche

1. Verfahren zur automatisierten Überwachung des Klebstoffauftrags auf Holz und Holzwerkstoffen, **dadurch gekennzeichnet, dass**
a. eine oder mehrere Beleuchtungseinrichtungen (3) das Werkstück (1) mit Klebstoffauftrag (2) mit gepulstem oder kontinuierlichem Licht im UV-Bereich (4) bestrahlen, dass
b. der aufgetragene Klebstoff (2) Licht im UV-Bereich (4) in deutlich geringerem Ausmaß absorbiert als das Werkstück aus Holz oder Holzwerkstoffen (1), und dass
c. eine oder mehrere Zeilen- oder Matrixkameras mit einer ausreichend hohen spektralen Empfindlichkeit im UV-Bereich (6) das von Werkstückbereichen mit (2) und ohne Klebstoffauftrag (1) unterschiedlich stark abgestrahlte UV-Licht (5) für eine Auswertung durch ein Bildverarbeitungssystem (9) aufnehmen und in elektrische Signale (8) umwandeln.

2. Verfahren nach Anspruch 1, **dadurch gekennzeichnet, dass** ein optisches Filtersystem im Strahlenverlauf des UV-Lichtes (7) den durchgelassenen Wellenlängenbereich mindestens auf den UV-Bereich oder auf einen Unterbereich innerhalb des UV-Bereiches beschränkt.

## Claims

1. Method for the automatic monitoring of the application of adhesive to wood and wooden materials, **characterised in that**,
a. one or more illumination devices (3), which irradiate the workpiece (1) with the application of adhesive (2) using pulsed or continuous light in the UV range (4), that
b. the applied adhesive (2) absorbs light in the UV range (4) to a much lower extent than the workpiece made of wood or wooden materials (1), and that
c. one or more line scan or matrix cameras with a sufficiently high spectral sensitivity in the UV range (6) absorb the UV light (5) reflected from workpiece areas with (2) and without the application of adhesive (1) to varying degrees for analysis by an image processing system (9) and convert this into electrical signals (8).

2. Method according to claim 1, **characterised in that** an optical filter system in the ray path of the UV light (7) limits the admitted wave range to at least the UV range or a subrange within the UV range.

## Revendications

1. Méthode pour le contrôle automatique de l'application d'adhésif sur bois ou sur des matériaux en bois, **se caractérisant par le fait que** :
a. Un ou plusieurs appareils d'éclairage (3) exposent la pièce (1) sur laquelle est appliqué l'adhésif (2) à une lumière pulsée ou continue dans la plage des UV (4), que
b. L'adhésif appliqué (2) absorbe la lumière dans la plage des UV (4) dans une mesure bien moindre que la pièce en bois ou dans des matériaux en bois (1), et que
c. Une ou plusieurs caméras à balayage linéaire ou à matrice d'éléments présentant une sensibilité spectrale suffisante dans la plage des UV (6) absorbent la lumière UV (5) plus ou moins forte diffusée par les zones de la pièce avec (2) et sans adhésif (1) pour une évaluation par un système de traitement des images (9) et la transforment en signaux électriques (8).

2. Méthode d'après la spécification 1, **se caractérisant par le fait qu'**un système de filtration optique dans la trajectoire des rayons UV (7) limite la plage des longueurs d'onde transmises au moins à la plage des UV ou à une sous-plage à l'intérieur de la plage des UV.
